# EUROPEAN PATENT APPLICATION

(11) **EP 4 744 927 A2**
(43) Date of publication of application: **20.05.2026**
(21) Application number: 25205857.3
(22) Date of filing: 30.09.2025
(51) Int. Cl.: B60K 6/40, B60K 6/405, B60K 6/46, B60K 17/16, F16H 57/04

(54) **VEHICLE DRIVING DEVICE**

(30) Priority: 15.11.2024 JP 2024199458
(71) Applicant: Suzuki Motor Corporation, Shizuoka 432-8611 (JP)
(72) Inventor: SADAHIRO, Shingo, HAMAMATSU-SHI, 432-8611 (JP); TSUCHIYA, Satsuki, HAMAMATSU-SHI, 432-8611 (JP)
(74) Representative: Plasseraud IP

(57) **Abstract**

The invention relates to a vehicle driving device (**3**) comprising a case (**3**A) configured to house an input shaft (**10**), a power generation motor (**21**), a drive motor (**23**), and a differential device (**16**), power being inputted to the input shaft (**10**) from an engine (**2**), the power generation motor (**21**) being configured to generate electric power from the power inputted to the input shaft (**10**), the drive motor (**23**) being actuated by the electric power generated by the power generation motor (**21**), the differential device (**16**) being configured to distribute the power, generated by the drive motor (**23**), to left and right driving wheels, wherein the case (**3**A) has an oil passage through which oil for cooling the power generation motor (**21**) and the drive motor (**23**) passes, the drive motor (**23**) is disposed behind the power generation motor (**21**), the differential device (**16**) is disposed below the drive motor (**23**), and an oil cooler (**7**) configured to cool the oil is disposed on an outer surface of the case (**3**A), at a position below the power generation motor (**21**), and forward of the differential device (**16**).

## Description

### [Technical Field]

The present invention relates to a vehicle driving device.

### [Background Art]

In order to suppress an increase in cost, and to achieve a reduction in the size of a case body with an oil cooler and an oil passage coupled to each other, a vehicle driving device described in Patent Literature 1 (JP2021-93867A) includes a transaxle housing, an oil passage for oil, and an oil cooler, an electric motor being accommodated in the transaxle housing, the oil cooling the electric motor, the oil cooler being disposed beside the transaxle housing, and the vehicle driving device has an oil passage structure in which at least a portion of the oil passage extends upward from a position below the electric motor, and the oil cooler also serves as a portion of the oil passage extending upward.

### [Citation List]

### [Patent Literature]

[Patent Literature 1] JP2021-93867A

### [Summary of Invention]

### [Technical Problem]

However, in the vehicle driving device described in Patent Literature 1, the oil passage is formed such that all oil pressure-fed by an oil pump passes through the oil cooler before being supplied to the electric motor, thus making the oil passage long and complicated. When an attempt is made to shorten the oil passage, a restriction is imposed on the mounting position of the oil cooler. As a result, there is a problem that the overall size, including the oil cooler, increases when the oil cooler is disposed to protrude from the transaxle housing.

In view of the above, it is an object of the present invention to provide a vehicle driving device that can reduce an overall size by suppressing protrusion of the oil cooler from the case, and that can enhance the cooling performance of the oil cooler.

### [Solution to Problem]

To solve the above-mentioned problem, the present invention is directed to a vehicle driving device including a case configured to house an input shaft, a power generation motor, a drive motor, and a differential device, power being inputted to the input shaft from an engine, the power generation motor being configured to generate electric power from the power inputted to the input shaft, the drive motor being actuated by the electric power generated by the power generation motor, the differential device being configured to distribute the power, generated by the drive motor, to left and right driving wheels, the vehicle driving device being characterized in that the case has an oil passage through which oil for cooling the power generation motor and the drive motor passes, the drive motor is disposed behind the power generation motor, the differential device is disposed below the drive motor, and an oil cooler configured to cool the oil is disposed on an outer surface of the case, at a position below the power generation motor, and forward of the differential device.

### [Advantageous Effect of Invention]

As described above, according to the present invention, it is possible to provide a vehicle driving device that can reduce the overall size by suppressing protrusion of the oil cooler from the case, and that can enhance the cooling performance of the oil cooler.

### [Brief Description of Drawings]

[Figure 1] Figure 1 is a left side view of a vehicle driving device according to one embodiment of the present invention.
[Figure 2] Figure 2 is a cross-sectional view of the vehicle driving device shown in Figure 1 taken along II-II, as viewed in the direction of arrows.
[Figure 3] Figure 3 is a right side view of a left case of the vehicle driving device according to one embodiment of the present invention.
[Figure 4] Figure 4 is a right side view of the left case showing oil passages in the left case of the vehicle driving device according to one embodiment of the present invention.
[Figure 5] Figure 5 is a configuration diagram of the oil passages of the vehicle driving device according to one embodiment of the present invention.

### [Description of Embodiment]

A vehicle driving device according to one embodiment of the present invention is a vehicle driving device including a case configured to house an input shaft, a power generation motor, a drive motor, and a differential device, power being inputted to the input shaft from an engine, the power generation motor being configured to generate electric power from the power inputted to the input shaft, the drive motor being actuated by the electric power generated by the power generation motor, the differential device being configured to distribute the power, generated by the drive motor, to left and right driving wheels, the vehicle driving device being characterized in that the case has an oil passage through which oil for cooling the power generation motor and the drive motor passes, the drive motor is disposed behind the power generation motor, the differential device is disposed below the drive motor, and an oil cooler configured to cool the oil is disposed on an outer surface of the case, at a position below the power generation motor, and forward of the differential device. Consequently, the vehicle driving device according to one embodiment of the present invention can reduce the overall size by suppressing protrusion of the oil cooler from the case, and can enhance the cooling performance of the oil cooler.

### [Embodiment]

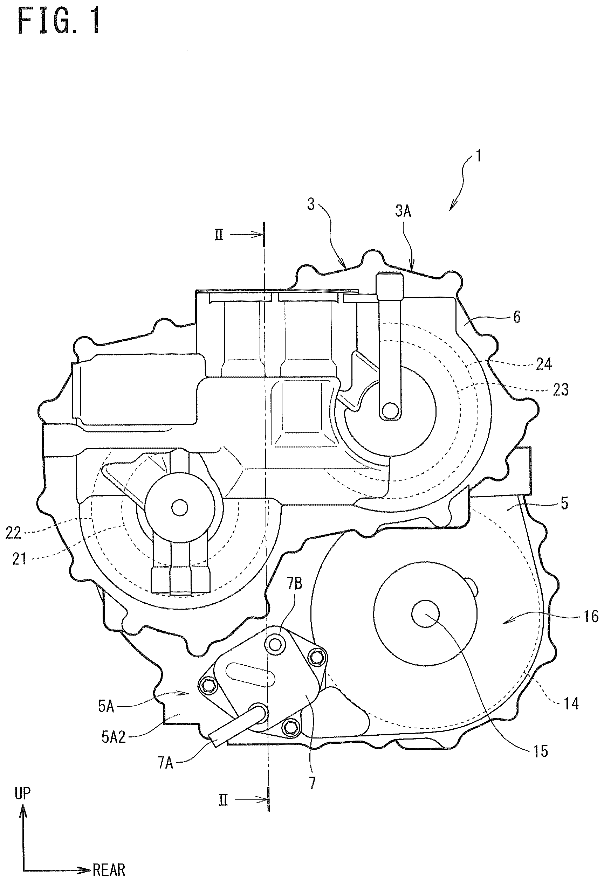

Hereinafter, a vehicle driving device according to one embodiment of the present invention will be described with reference to drawings. Figure 1 to Figure 5 are diagrams showing the vehicle driving device according to one embodiment of the present invention.

In Figure 1 to Figure 5, the up-down direction, the front-rear direction, and the left-right direction are based on directions of the vehicle driving device in a state of being disposed in a vehicle, and the front-rear direction of the vehicle is taken as the front-rear direction, the left-right direction (vehicle width direction) of the vehicle is taken as the left-right direction, and the up-down direction (vehicle height direction) of the vehicle is taken as the up-down direction.

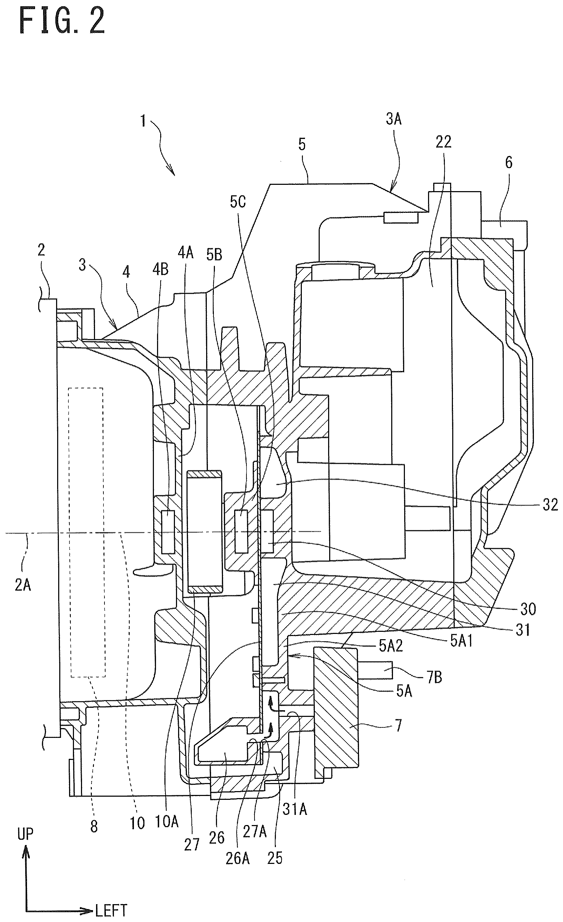

As shown in Figure 1 and Figure 2, an engine 2 of an internal combustion type and a driving device 3 connected to the engine 2 are provided in an engine room not shown in the drawing and provided at the front part of a vehicle 1. The engine 2 is transversely disposed in the engine room such that the cylinder bank direction extends in the vehicle width direction. The driving device 3 is connected to the left end portion of the engine 2. The driving device 3 of the present embodiment forms a vehicle driving device.

The driving device 3 includes a case 3A serving as a housing. The case 3A houses an input shaft 10, a power generation motor 21, a drive motor 23, and a differential device 16, power being inputted to the input shaft 10 from the engine 2, the power generation motor 21 generating electric power from the power inputted to the input shaft 10, the drive motor 23 being actuated by the electric power generated by the power generation motor 21, the differential device 16 distributing the power generated by the drive motor 23 to left and right driving wheels not shown in the drawing via left and right drive shafts (not shown in the drawing) 15. As described above, the vehicle 1 is a so-called two-motor series hybrid vehicle.

The case 3A has a motor chamber 22 and a motor chamber 24, the motor chamber 22 housing the power generation motor 21, the motor chamber 24 housing the drive motor 23. The case 3A is constituted of a right case 4 having a cylindrical shape, a left case 5 having a cylindrical shape, and a cover member 6, the right case 4 being connected to the left end portion of the engine 2, the left case 5 being connected to the left end portion of the right case 4, the cover member 6 being connected to the left end portion of the left case 5.

As shown in Figure 2, a damper 8 is housed between the right case 4 and the engine 2, the damper 8 connecting a crankshaft 2A and the input shaft 10 together. An input gear 10A is fixed to the input shaft 10. The right case 4 holds a bearing 4B at a position in the vicinity of the right side of the input gear 10A, the bearing 4B pivotally supporting the input shaft 10.

The right case 4 includes a partition wall 4A at a position to the left side of the damper 8, the partition wall 4A extending in the up-down direction, and having a vertical wall shape. The partition wall 4A partitions the inside of the right case 4 into a space close to the engine 2, and a space far from the engine 2. The bearing 4B is held by the partition wall 4A.

As shown in Figure 2, a vertical wall part 5A extending in the up-down direction is provided in the vicinity of the right end portion of the left case 5. The vertical wall part 5A extends in the up-down direction on a plane orthogonal to the input shaft 10. A space formed between the partition wall 4A and the vertical wall part 5A is a space where a power transmission mechanism is disposed, and driving speed reduction gears (gears 12A, 13A, 13B, and a ring gear 14) described later and the differential device 16 are disposed in this power transmission space. The upper part of the vertical wall part 5A forms a partition wall part 5A1, and this partition wall part 5A1 extends in the up-down direction to partition the inside of the case 3A into a space close to the engine 2 and a space close to the cover member 6. This space close to the cover member 6 forms the motor chamber 22 and the motor chamber 24, the motor chamber 22 housing the power generation motor 21, the motor chamber 24 housing the drive motor 23. That is, the power generation motor 21 and the drive motor 23 are disposed on the left side of the upper part of the vertical wall part 5A, and the power generation motor 21 and the drive motor 23 are attached to the left side surface of the partition wall part 5A1 of the vertical wall part 5A. A bearing 5B is disposed on the right side surface of the partition wall part 5A1 of the vertical wall part 5A, the bearing 5B pivotally supporting the input shaft 10 at a position in the vicinity of the left side of the input gear 10A. The bearing 5B is held with the outer race thereof fitted into the hole formed in a housing 5C. The housing 5C, which holds the bearing 5B, is fixed to the right side surface of the partition wall part 5A1 of the vertical wall part 5A with bolts or the like.

In other words, the vertical wall part 5A supports the input shaft 10 via the bearing 5B. The lower part of the vertical wall part 5A forms an outer wall part 5A2 that partitions the inside and outside of the case 3A, and extends in the up-down direction to partition the inside and outside of the case 3A. The left side surface of the outer wall part 5A2, being the lower part of the vertical wall part 5A, is exposed to the outside.

As shown in Figure 1 and Figure 2, portions of the case 3A that form the motor chambers 22, 24 bulge leftward from the vertical wall part 5A. The motor chambers 22, 24 are cylindrical spaces formed in the left case 5. The left end portions of the motor chambers 22, 24 are closed by the cover member 6. As described above, the portions of the case 3A that form the motor chambers 22, 24 bulge leftward from the vertical wall part 5A, thus forming the bulging parts and hence, a space is present below the bulging parts (below the power generation motor 21 and the drive motor 23), and the left outer surface of the outer wall part 5A2, forming the lower part of the vertical wall part 5A, faces this space. That is, the outer surface of the outer wall part 5A2 of the vertical wall part 5A faces the space located below the bulging parts. In the present embodiment, an oil cooler 7 described later is disposed in this space, and the oil cooler 7 is attached to the outer surface of the outer wall part 5A2, being the lower part of the vertical wall part 5A.

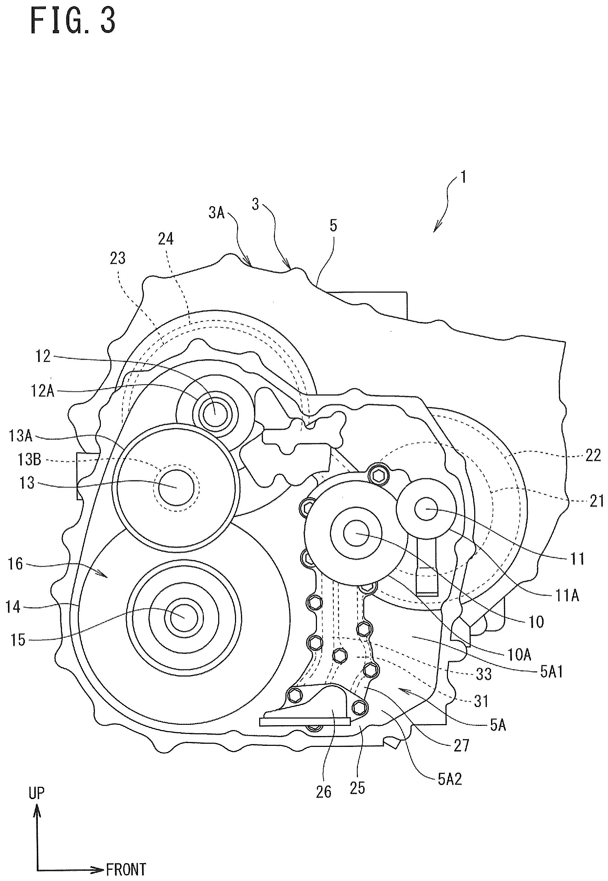

As shown in Figure 3, the input shaft 10, a motor shaft 11, being the rotary shaft of the power generation motor 21, a motor shaft 12, being the rotary shaft of the drive motor 23, an intermediate shaft 13, and a rotation axis 15 of the differential device 16 are provided in parallel to the left case 5 of the driving device 3.

The input shaft 10 is connected to the crankshaft 2A of the engine 2 via the damper 8 (see Figure 2). A gear 11A is provided to the motor shaft 11 of the power generation motor 21, and this gear 11A meshes with the input gear 10A. The rotation transmitted from the engine 2 to the input shaft 10 is changed in speed (is increased in speed in the present embodiment) due to meshing between the input gear 10A and the gear 11A, and is then transmitted to the power generation motor 21.

The gear 12A is provided to the motor shaft 12 of the drive motor 23. The gear 13A and the gear 13B are provided to the intermediate shaft 13, the gear 13A having a large diameter and meshing with the gear 12A, the gear 13B having a small diameter and meshing with the ring gear 14 of the differential device 16. The rotation of the drive motor 23 is changed in speed (is reduced in speed in the present embodiment) due to meshing between the gear 12A and the gear 13A, and is then transmitted from the gear 13B to the ring gear 14. At the rear part of the left case 5, the motor shaft 12, the intermediate shaft 13, and the rotation axis 15 of the differential device 16 are arranged in this order in the up-down direction from the top.

The input gear 10A, the gears 11A, 12A, 13A, 13B, and the differential device 16 including the ring gear 14 are disposed in a space sandwiched between the partition wall 4A of the right case 4 and the vertical wall part 5A of the left case 5. An oil reservoir 25 that stores oil is provided at the bottom part of this space. The oil serves as lubricating oil and cooling oil, the lubricating oil lubricating objects to be lubricated including the power generation motor 21 and the drive motor 23, the cooling oil cooling the objects to be lubricated.

The differential device 16 includes the ring gear 14, a pinion shaft not shown in the drawing, a pair of pinion gears not shown in the drawing, and a pair of side gears not shown in the drawing, the pair of pinion gears being rotatably supported by the pinion shaft, the pair of side gears meshing with the pinion gears. The side gears are connected to the left and right drive shafts (not shown in the drawing).

The ring gear 14 of the differential device 16 meshes with the gear 13B on the intermediate shaft 13. The differential device 16 transmits the rotation that is transmitted from the gear 13B to the ring gear 14, to the left and right driving wheels via the left and right drive shafts (not shown in the drawing), while allowing a difference in rotation between the left and right driving wheels not shown in the drawing.

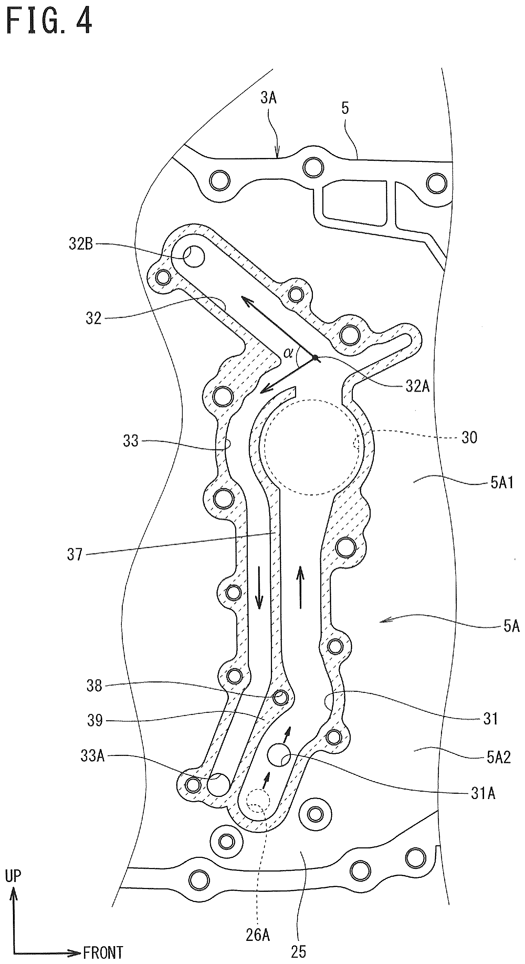

As shown in Figure 2 and Figure 4, an oil pump 30 is provided to the engine 2-side surface of the partition wall part 5A1 of the vertical wall part 5A to be coaxial with the input shaft 10. The oil pump 30 is disposed to be coaxial with the input shaft 10 extending from the engine 2, and is driven and rotated by the driving force of the engine 2. The oil pump 30 is a trochoid pump that suctions oil from the lower side thereof, and discharges the oil above the oil pump 30.

The oil pump 30 is accommodated in a recessed part formed on the engine-2-side surface of the partition wall part 5A1 of the vertical wall part 5A, and this recessed part is closed by attaching the housing 5C from the direction of the engine 2, the housing 5C holding the bearing 5B. The housing 5C has a through hole that is coaxial with the input shaft 10, a drive shaft that rotates and drives the oil pump 30 penetrating through the through hole. The drive shaft penetrates through this through hole and connects the input shaft 10 and the inner rotor of the trochoid pump (the oil pump 30) together, and the oil pump 30 is rotated and driven by the rotation of the input shaft 10. The oil pump 30 suctions oil stored in the oil reservoir 25, from a suction oil passage 31, and delivers the oil to a discharge oil passage 32 to pressure-feed the oil to the objects to be lubricated. The rotational direction of the trochoid pump (the oil pump 30) is clockwise in Figure 4. A volume chamber formed between an outer rotor and the inner rotor expands due to movement from the lower side toward the rear side in Figure 4 caused by rotation, thus suctioning oil from the suction oil passage 31. In the same manner, the volume chamber shrinks due to movement from the rear side toward the upper side in Figure 4, thus discharging oil to the discharge oil passage 32. The recessed part of the vertical wall part 5A is in communication with the suction oil passage 31 via a suction port, and is in communication with the discharge oil passage 32 via a discharge port, the recessed part accommodating the oil pump 30 therein. A strainer 26 that filters oil is attached to the outer wall part 5A2 on a surface on which the oil reservoir 25 is provided, the outer wall part 5A2 being the lower part of the vertical wall part 5A. The strainer 26 is immersed in oil stored in the oil reservoir 25. The internal passage of the strainer 26 is in communication with the lower end portion of the suction oil passage 31, and the oil pump 30 pumps up the filtered oil in the internal passage of the strainer 26. That is, the strainer 26 is attached to the inner surface side of the case 3A at a position that corresponds to the lower part of the vertical wall part 5A, the oil cooler 7 described later being attached to the outer surface of the lower part of the vertical wall part 5A. The strainer 26 is in communication with the lower end portion of the suction oil passage 31, and a plate member 27 described later is fixed by fastening to the vertical wall part 5A in a state of being pushed against the vertical wall part 5A, the plate member 27 forming the suction oil passage 31.

As shown in Figure 1 and Figure 2, the oil cooler 7 that cools oil is provided to the left outer surface of the case 3A (the left case 5) at the outer wall part 5A2, being the lower part of the vertical wall part 5A.

The oil cooler 7 is disposed below the bulging parts of the motor chambers 22, 24, at a position higher than the lower end of the left case 5. The oil cooler 7 is fixed to the outer wall part 5A2 of the vertical wall part 5A in a posture that extends along the surface of the outer wall part 5A2 of the vertical wall part 5A. The vertical wall part 5A-side surface of the oil cooler 7 has an oil inflow port and an oil outflow port, oil flowing into the oil cooler 7 from the oil inflow port, oil flowing out from the oil outflow port after passing through the oil cooler 7. The oil inflow port is in communication with a communication hole 33A, being an oil passage formed in the vertical wall part 5A, and the oil outflow port is in communication with a communication hole 31A, being an oil passage formed in the vertical wall part 5A. That is, the oil cooler 7 is attached to the outer surface of the vertical wall part 5A, which is the outer surface of the case 3A. The oil cooler 7 is in communication with a cooler inflow oil passage 33 described later via the communication hole 33A, and oil flows into the oil cooler 7 from the cooler inflow oil passage 33. The oil cooler 7 is in communication with the suction oil passage 31 via the communication hole 31A, and flows out oil to the suction oil passage 31. To allow the oil cooler 7 to achieve such communication by fixing the oil cooler 7 to the outer wall part 5A2 of the vertical wall part 5A, respective coupling portions, including a fastening direction for fixing, are formed in parallel. To be more specific, the respective coupling portions for fixing and communication of the oil cooler 7, including the fastening direction for fixing, extend in a direction perpendicular to the vertical wall part 5A. An inlet pipe 7A and an outlet pipe 7B are provided to the left outer surface of the oil cooler 7, coolant entering the inlet pipe 7A from a radiator not shown in the drawing, the outlet pipe 7B sending coolant to the radiator. The oil cooler 7 cools oil by causing the oil to exchange heat with the coolant. The inlet pipe 7A and the outlet pipe 7B are provided on a surface on the side opposite to the vertical wall part 5A-side surface and hence, routing of the pipes can be easily performed.

As shown in Figure 2, Figure 3, and Figure 4, the right side surface of the vertical wall part 5A has the suction oil passage 31, the discharge oil passage 32, and the cooler inflow oil passage 33, the suction oil passage 31 being in communication with the strainer 26 and the oil pump 30, the discharge oil passage 32 receiving oil discharged from the oil pump 30, and causing the oil to flow toward objects to be lubricated, the cooler inflow oil passage 33 being branched from the discharge oil passage 32 and being in communication with the oil cooler 7.

The suction oil passage 31, the discharge oil passage 32, and the cooler inflow oil passage 33 are formed by grooves and the single plate member 27 having a flat-plate shape, the grooves being formed on the vertical wall part 5A, the plate member 27 covering the grooves.

As shown in Figure 4, the suction oil passage 31 is formed such that the upper end thereof is disposed below the oil pump 30, and is in communication with the oil pump 30 via the suction port, and the suction oil passage 31 extends downward from that position. The lower end of the suction oil passage 31 is slightly bent rearward to be in communication with an outlet 26A of the strainer 26. The discharge oil passage 32 is formed such that the lower end thereof is disposed above the oil pump 30, and is in communication with the oil pump 30 via the discharge port, the discharge oil passage 32 extends obliquely upward and rearward from that position, and a communication hole 32B is formed at the upper end of the discharge oil passage 32, oil flowing out from the communication hole 32B toward objects to be lubricated. The cooler inflow oil passage 33 is formed such that the upper end thereof is in communication with the lower end of the discharge oil passage 32, which is disposed above the oil pump 30, and the cooler inflow oil passage 33 curves along the rear outer periphery (the peripheral wall that is in contact with the rear side of the outer rotor) of the oil pump 30, and extends downward along the suction oil passage 31. To be more specific, the cooler inflow oil passage 33 and the suction oil passage 31 are formed side by side in close proximity on the vertical wall part 5A to extend in the up-down direction. The cooler inflow oil passage 33 and the suction oil passage 31 are partitioned by a center wall 37, which is erected therebetween, and the upper portion of the center wall 37 is coupled to the rear outer periphery (the peripheral wall that is in contact with the rear side of the outer rotor) of the recessed part of the vertical wall part 5A, the recessed part housing the oil pump 30 therein. Although the cooler inflow oil passage 33 and the suction oil passage 31 are formed side by side on the vertical wall part 5A, the flow directions of oil are opposite to each other. That is, oil flows downward in the cooler inflow oil passage 33, whereas oil flows upward in the suction oil passage 31. A boss 39 is formed on the center wall 37 in a bulged manner by increasing the thickness of the center wall 37, the boss 39 having a screw hole 38 to which a bolt is threaded to fix the plate member 27. Oil leakage between both oil passages is suppressed by eliminating a gap by joining the center wall 37 and the plate member 27 together. The cooler inflow oil passage 33 and the suction oil passage 31 are formed side by side on the vertical wall part 5A with the center wall 37 interposed therebetween and hence, by attaching the single plate member 27 having a flat-plate shape to collectively close two grooves forming the oil passages, the respective oil passages can be formed. The upper part of the plate member 27 is fastened together with the housing 5C, which holds the bearing 5B, and the plate member 27 is attached to the vertical wall part 5A in a state of being pushed by the housing 5C. That is, the plate member 27 creates a pump housing space for the oil pump 30 in cooperation with the recessed part of the vertical wall part 5A.

As shown in Figure 2, the communication hole 31A is formed at the lower part of the suction oil passage 31, and the oil cooler 7 is coupled to the communication hole 31A, the communication hole 31A forming the outlet of the oil cooler 7, oil flowing into the outlet after passing through the oil cooler 7. Further, the outlet 26A of the strainer 26 is in communication with the lower part of the suction oil passage 31 via a communication hole 27A of the plate member 27, oil flowing out from the strainer 26 through the outlet 26A.

In other words, the outlet 26A of the strainer 26 is disposed at the lower end portion of the suction oil passage 31. With respect to portions that communicate with the suction oil passage 31, the communication hole 31A, forming the outlet of the oil cooler 7, is located at a position higher than the position at which the outlet 26A of the strainer 26 is coupled to the suction oil passage 31, and closer to the oil pump 30 than the outlet 26A of the strainer 26. The communication hole 27A having the same diameter as the outlet 26A is formed in the plate member 27 at a position that corresponds to the outlet 26A of the strainer 26. After flowing out from the outlet 26A of the strainer 26, oil enters the suction oil passage 31 through the communication hole 27A. The suction oil passage 31 can also serve as an oil passage extending from the oil cooler 7 to the oil pump 30 in this manner and hence, it is possible to simplify the configuration of the oil passage. The communication hole 33A, which is formed in the cooler inflow oil passage 33 to allow oil to flow into the oil cooler 7, is formed at the lower end portion of the cooler inflow oil passage 33, and is formed at a height position substantially equal to the height position of the outlet 26A of the strainer 26 and the communication hole 27A. The communication hole 33A is located at a position lower than the communication hole 31A, forming the outlet of the oil cooler 7.

This height relationship can suppress draining of oil from the inside of the oil cooler 7 when the oil pump 30 is in a stopped state. That is, when the oil pump 30 is in a stopped state, the strainer 26 is coupled to the lower part of the suction oil passage 31 and hence, oil in the suction oil passage 31 back flows to the strainer 26, and is discharged into the oil reservoir 25. In contrast, oil in the oil cooler 7 does not drain, and stays in the oil cooler 7. Although the communication hole 33A, which allows oil to flow into the oil cooler 7, is coupled to the cooler inflow oil passage 33, the cooler inflow oil passage 33 extends to a point higher than the communication hole 33A, and reaches a position higher than the communication hole 31A, and the communication hole 33A forms the lowermost part. Accordingly, oil in the cooler inflow oil passage 33 flows into the oil cooler 7, and the oil stays in the oil cooler 7.

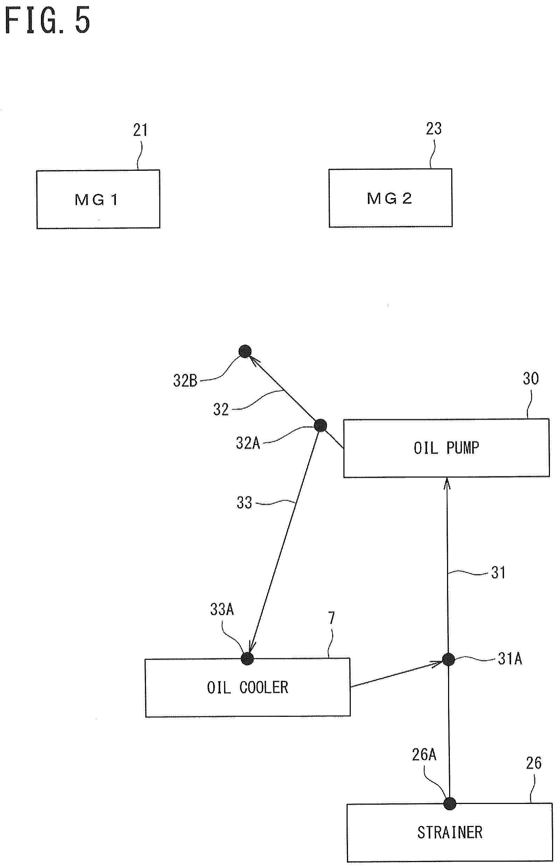

As shown in Figure 5, oil filtered by the strainer 26 enters the suction oil passage 31 from the outlet 26A, and is pumped up by the oil pump 30. The oil pump 30 pressure-feeds the oil to the discharge oil passage 32.

The oil that is pressure-fed to the discharge oil passage 32 by the oil pump 30 passes through the communication hole 32B, and then enters an oil passage not shown in the drawing. The oil that enters the oil passage not shown in the drawing cools the power generation motor 21 (indicated by "MG1" in the drawing) and the drive motor 23 (indicated by "MG2" in the drawing). After cooling the power generation motor 21 and the drive motor 23, the oil flows down while lubricating other objects to be lubricated, and then returns to the oil reservoir 25.

A portion of the oil that is pressure-fed to the discharge oil passage 32 by the oil pump 30 enters the cooler inflow oil passage 33 from a branch part 32A, flows down the cooler inflow oil passage 33, and is introduced into the oil cooler 7 from the communication hole 33A. The oil that is cooled by the oil cooler 7 is introduced into the suction oil passage 31 from the communication hole 31A, forming the outlet of the oil cooler 7, is mixed with oil suctioned from the strainer 26 through the outlet 26A, is suctioned by the oil pump 30, and is then pressure-fed to the discharge oil passage 32 again. As described above, the driving device 3 of the present invention adopts a parallel cooling method, in which a portion of oil is diverted from the discharge oil passage 32 to the oil cooler 7 to cool the oil, instead of a series cooling method, in which the oil cooler 7 is provided at the intermediate portion of the discharge oil passage 32 to cause all oil to pass through the oil cooler 7.

As shown in Figure 1, when the driving device 3 of the present invention is viewed from the left side, the drive motor 23 is disposed behind the power generation motor 21. The differential device 16 is disposed below the drive motor 23. The oil cooler 7 is disposed on the outer surface of the case 3A, at a position of the front part of the vertical wall part 5A, below the power generation motor 21, and forward of the differential device 16.

As shown in Figure 4, the discharge oil passage 32 is formed such that the lower end (the upstream-side end portion in the flow of oil) thereof is disposed above the oil pump 30, and the discharge oil passage 32 extends obliquely upward and rearward from that position. That is, the discharge oil passage 32 allows oil to flow in a state in which the flow direction of the oil is bent obliquely upward and rearward, the oil being discharged from the oil pump 30, and flowing upward after passing through the discharge port. This flow direction is opposite to the rotational direction of the rotor disposed at the upper part of the oil pump 30. In other words, the discharge oil passage 32 extends linearly at an inclination relative to the radial direction (radial direction) from the center of the oil pump 30. To be more specific, the discharge oil passage 32 extends linearly at a rearward inclination relative to the radial direction extending upward (the direction extending vertically upward) from the center of the oil pump 30.

The cooler inflow oil passage 33 is branched from the discharge oil passage 32 in the vicinity of the discharge port of the oil pump 30, at a rearward inclination of angle α relative to the extension direction of the discharge oil passage 32. That is, as shown in Figure 4, a portion directly above the oil pump 30, that is, the lower end (the upstream-side end portion in the flow of oil) of the discharge oil passage 32, is the branch part 32A, and the cooler inflow oil passage 33 is branched from the discharge oil passage 32 at this branch part 32A. Although the discharge oil passage 32 allows oil flowing upward from the oil pump 30 to flow in a direction that is bent obliquely upward and rearward, the cooler inflow oil passage 33 is disposed to extend in a direction that is further bent, and the inlet of the cooler inflow oil passage 33 at the branch part 32A is open at a position inward of the bend of the discharge oil passage 32, so that the inlet is open at a position at which oil is less likely to flow into the cooler inflow oil passage 33. Particularly, the opening part of the cooler inflow oil passage 33 is formed using the end edge of a peripheral wall that is in contact with the rear side of the outer rotor of the oil pump 30, and the edge portion of the opening on a side opposite to the peripheral wall is located rearward of the end edge of the peripheral wall, so that the opening part is formed to face slightly upward. Due to such a configuration of the opening of the cooler inflow oil passage 33, the opening can be caused to face toward the downstream side of the flow of oil flowing out from the oil pump 30 through the discharge port and hence, oil is prevented from flowing into the cooler inflow oil passage 33.

The discharge oil passage 32 is formed to have a larger cross-sectional area than the cooler inflow oil passage 33.

In other words, the cooler inflow oil passage 33 is formed to have a smaller cross-sectional area than the discharge oil passage 32.

In addition, the cooler inflow oil passage 33 has the bend and a protruding fastening boss. For example, the upper part of the cooler inflow oil passage 33 is curved along the peripheral wall that is in contact with the rear side of the outer rotor of the oil pump 30. Consequently, it is possible to suppress a situation in which an excessively large amount of oil is diverted from the discharge oil passage 32 to the cooler inflow oil passage 33 and hence, excessive cooling of oil is suppressed. When the amount of oil that is diverted from the discharge oil passage 32 to the cooler inflow oil passage 33 is smaller than the optimum amount with this configuration, and when the amount of oil that is diverted to the cooler inflow oil passage 33 is required to be increased, an adjustment for an increase in the amount of diverted oil can be made by reducing the cross-sectional area of the communication hole 32B located on the downstream side of the discharge oil passage 32. To be more specific, by setting the opening area of the communication hole 32B located on the downstream side of the discharge oil passage 32 to be smaller than the opening area of the communication hole 33A located on the downstream side of the cooler inflow oil passage 33 to cause the communication hole 32B to serve as an orifice, the amount of oil that passes through the communication hole 32B, which is located on the downstream side of the discharge oil passage 32, is reduced, and the amount of oil that passes through the communication hole 33A, which is located on the downstream side of the cooler inflow oil passage 33, is increased. Accordingly, an adjustment can be made to achieve an optimum distribution between oil flowing straight through the discharge oil passage 32 and oil diverted to the cooler inflow oil passage 33.

As described above, in the present embodiment, the case 3A has the oil passages through which oil for cooling the power generation motor 21 and the drive motor 23 passes. Further, the drive motor 23 is disposed behind the power generation motor 21, and the differential device 16 is disposed below the drive motor 23.

In addition, the oil cooler 7, which cools oil, is disposed on the outer surface of the case 3A, at a position below the power generation motor 21, and forward of the differential device 16.

Consequently, the oil cooler 7 can be disposed in the recessed part of the case 3A, at a position below the power generation motor 21, and forward of the differential device 16. Therefore, protrusion of the oil cooler 7 from the case 3A can be suppressed and hence, the size of the driving device 3 can be reduced. In addition, the oil cooler 7 can be disposed at the front part of the case 3A, the front part being located forward of the differential device 16 and hence, traveling wind impinges on the oil cooler 7, thus promoting cooling of oil. As a result, the overall size of the driving device 3 can be reduced by suppressing the protrusion of the oil cooler 7 from the case 3A, and the cooling performance of the oil cooler can be enhanced.

In the present embodiment, the case 3A includes the vertical wall part 5A that supports the input shaft 10, and that extends in the up-down direction to partition the inside and outside of the case 3A. Further, the oil pump 30 is provided on the vertical wall part 5A to be coaxial with the input shaft 10, the strainer 26 is attached to the lower part of the vertical wall part 5A, and the oil cooler 7, which cools oil, is provided on the outer surface of the case 3A, at a position of the lower part of the vertical wall part 5A. That is, the strainer 26 and the oil cooler 7 are disposed on the front and rear sides of the lower part of the vertical wall part 5A. In addition, the vertical wall part 5A has the suction oil passage 31, the discharge oil passage 32, and the cooler inflow oil passage 33, the suction oil passage 31 being in communication with the strainer 26 and the oil pump 30, the discharge oil passage 32 being in communication with the oil pump 30 and the objects to be lubricated, the cooler inflow oil passage 33 being branched from the discharge oil passage 32 and being in communication with the oil cooler 7. In other words, the strainer 26 and the oil cooler 7 are disposed on the front and rear sides of the lower part of the vertical wall part 5A. The lower part of the vertical wall part 5A is disposed between the strainer 26 and the oil cooler 7. The suction oil passage 31 and the cooler inflow oil passage 33 are disposed between the strainer 26 and the oil cooler 7. With respect to the strainer 26 and the oil cooler 7, the strainer 26 is disposed for one of either the suction oil passage 31 or the cooler inflow oil passage 33, and the oil cooler 7 is disposed for the other of either the suction oil passage 31 or the cooler inflow oil passage 33.

Consequently, the strainer 26, the oil pump 30, and the oil cooler 7 can be collectively disposed on the single vertical wall part 5A of the case 3A and, in addition, the suction oil passage 31 and the cooler inflow oil passage 33 can be collectively formed. Therefore, the oil passage that passes through the oil cooler 7 can be shortened and hence, the overall size can be reduced.

In the present embodiment, the communication hole 31A, forming the outlet of the oil cooler 7, is in communication with the suction oil passage 31.

Consequently, the suction oil passage 31 can also serve as the oil passage extending from the oil cooler 7 to the oil pump 30 and hence, it is possible to simplify the configuration of the oil passage.

In the present embodiment, the cooler inflow oil passage 33 and the suction oil passage 31 are formed side by side in close proximity on the vertical wall part 5A to extend in the up-down direction. In addition, the suction oil passage 31 and the cooler inflow oil passage 33 are formed by the grooves and the single plate member 27, the grooves being formed on the vertical wall part 5A, the single plate member 27 covering the grooves.

Consequently, the configurations of the suction oil passage 31 and the cooler inflow oil passage 33 can be simplified, and thus can be easily formed and hence, productivity can be enhanced.

Although the embodiment of the present invention has been disclosed, it is apparent that modifications may be applied by those who are skilled in the art without departing from the scope of the present invention. All of such modifications and equivalents are intended to be encompassed by the following claims.

### [Reference Signs List]

1 vehicle, 2 engine, 3 driving device (vehicle driving device), 3A case, 5 left case (case), 5A vertical wall part, 7 oil cooler, 10 input shaft, 16 differential device, 21 power generation motor, 23 drive motor, 26 strainer, 27 plate member, 30 oil pump, 31 suction oil passage, 31A communication hole, 32 discharge oil passage, 33 cooler inflow oil passage

## Claims

1. A vehicle driving device (3) comprising a case (3A) configured to house an input shaft (10), a power generation motor (21), a drive motor (23), and a differential device (16), power being inputted to the input shaft (10) from an engine (2), the power generation motor (21) being configured to generate electric power from the power inputted to the input shaft (10), the drive motor (23) being actuated by the electric power generated by the power generation motor (21), the differential device (16) being configured to distribute the power, generated by the drive motor (23), to left and right driving wheels, the vehicle driving device (3) being **characterized in that**
the case (3A) has an oil passage through which oil for cooling the power generation motor (21) and the drive motor (23) passes,
the drive motor (23) is disposed behind the power generation motor (21),
the differential device (16) is disposed below the drive motor (23), and
an oil cooler (7) configured to cool the oil is disposed on an outer surface of the case (3A), at a position below the power generation motor (21), and forward of the differential device (16).

2. The vehicle driving device (3) according to claim 1, **characterized in that**
the case (3A) includes a vertical wall part (5A) that supports the input shaft (10), and that extends in an up-down direction to partition an inside and an outside of the case (3A),
an oil pump (30) is provided to the vertical wall part (5A) to be coaxial with the input shaft (10),
a strainer (26) is attached to a lower part of the vertical wall part (5A),
the oil cooler (7), which is configured to cool the oil, is provided on the outer surface of the case (3A), at a position of the lower part of the vertical wall part (5A), and
the vertical wall part (5A) has a suction oil passage (31), a discharge oil passage (32), and a cooler inflow oil passage (33), the suction oil passage (31) being in communication with the strainer (26) and the oil pump (30), the discharge oil passage (32) being in communication with the oil pump (30) and an object to be lubricated, the cooler inflow oil passage (33) being branched from the discharge oil passage (32) and being in communication with the oil cooler (7).

3. The vehicle driving device (3) according to claim 2, **characterized in that** an outlet of the oil cooler (7) is in communication with the suction oil passage (31).

4. The vehicle driving device (3) according to claim 2 or claim 3, **characterized in that**
the cooler inflow oil passage (33) and the suction oil passage (31) are formed side by side in close proximity on the vertical wall part (5A) to extend in the up-down direction, and
the suction oil passage (31) and the cooler inflow oil passage (33) are formed by a groove and a single plate member (27), the groove being formed on the vertical wall part (5A), the single plate member (27) covering the groove.

5. A vehicle driving device (3) comprising a case (3A) configured to accommodate a strainer (26) configured to filter oil, the vehicle driving device (3) being **characterized in that**
the case (3A) includes a vertical wall part (5A) extending in an up-down direction to partition an inside and an outside of the case (3A),
the strainer (26) is attached to an inner surface of the vertical wall part (5A), and
an oil cooler (7) configured to cool the oil is attached to an outer surface of the vertical wall part (5A), at a position that faces the strainer (26).

6. The vehicle driving device (3) according to claim 5, **characterized in that**
the vertical wall part (5A) has an oil passage through which the oil passes, and
the strainer (26) and the oil cooler (7) are in communication with the oil passage.
